(19) Europäisches Patentamt

European Patent Office

Office européen des brevets

(11) Veröffentlichungsnummer: **0 273 259 B1**

## (12) EUROPÄISCHE PATENTSCHRIFT

(45) Veröffentlichungstag der Patentschrift: **20.03.91**

(51) Int. Cl.⁵ **A61C 1/14, B23B 31/02**

(21) Anmeldenummer: **87118244.0**

(22) Anmeldetag: **09.12.87**

---

(54) Spannvorrichtung für insbesondere zahnärztliche Werkzeuge.

---

(30) Priorität: **22.12.86 DE 3644055**

(43) Veröffentlichungstag der Anmeldung:
**06.07.88 Patentblatt 88/27**

(45) Bekanntmachung des Hinweises auf die
Patenterteilung:
**20.03.91 Patentblatt 91/12**

(84) Benannte Vertragsstaaten:
**AT CH DE FR IT LI**

(56) Entgegenhaltungen:
**EP-A- 0 037 021**
**DE-A- 3 402 635**

(73) Patentinhaber: **Siemens Aktiengesellschaft**
**Wittelsbacherplatz 2**
**W-8000 München 2(DE)**

(72) Erfinder: **Fleer, Ernst-Otto**
**Friedrich-Ebert-Strasse 35**
**W-6140 Bensheim 3(DE)**
Erfinder: **Landgraf, Hermann**
**Schillerstrasse 34**
**W-6143 Lorsch(DE)**
Erfinder: **Schwarz, Werner**
**Birkenweg 5**
**W-6148 Heppenheim 5(DE)**

## Beschreibung

Die Erfindung betrifft eine Spannvorrichtung für insbesondere zahnärztliche Werkzeuge, welche einen zylindrischen Schaft aufweisen, enthaltend eine in Drehung versetzbare hülsenförmige Welle zur Aufnahme einer den Werkzeugschaft haltenden Spannhülse, welche an ihrem dem Werkzeug abgewandten Ende wenigstens zwei Längsschlitze aufweist, wodurch am Umfang gesehen zwischen den Schlitzen federnde, den Werkzeugschaft in der Spannstellung in der Spannhülse festhaltende Zungen gebildet sind, die zwecks Entnahme des Werkzeuges mittels eines axial beweglich von einer Handhabe betätigbaren Stößels radial nach außen in eine Entspannstellung bringbar sind, zu welchem Zweck der Stößel an seinem der Spannhülse zugewandten Ende einen Außenkonus und die Spannhülse einen mit diesem in Eingriff bringbaren Innenkonus aufweisen, wobei der Stößel axial frei beweglich in der Welle geführt, die Spannhülse dagegen axial unbeweglich in der Welle gehaltert ist.

Aus der US-A-40 89 115 ist eine Spannvorrichtung bekannt, bei der der Stößel in der Welle eingeschraubt ist. Der Stößel kann jedoch durch ein gesondertes Schraubwerkzeug (Mehrkantschlüssel od.dgl.), welches von der Oberseite des Kopfgehäuses, in dem das Werkzeug drehbar gehaltert ist, eingeführt wird, zur Spannhülse hin axial verstellt werden. In der Spannstellung, wenn also der Werkzeug-schaft durch Reibkraft (friction grip) von den Spannzungen der Spannhülse gehalten wird, befindet sich der Stößel in einem geringen axialen Abstand zum korrespondierenden Ende der Spannhülse. Zur Entnahme des Werkzeuges ist der Stößel so weit in die Welle einzuschrauben, bis sein Außenkonus in den Innenkonus der Spannhülse eingreift, wodurch die federnden Zungen radial nach außen bewegt werden.

Abhängig davon, wie weit der Stößel eingeschraubt wird, kann mit dieser Lösung auch eine gewisse Vor-Anstellung der Spannzungen erzielt werden, in der die beiden Konen einerseits in Eingriff sind, andererseits aber noch ein sicheres Halten des Werkzeugschaftes in der Spannstellung gegeben ist.

Nachteilig bei einer solchen Spannvorrichtung ist, daß ein zusätzliches Werkzeug zum Entnehmen des Werkzeuges benötigt wird. Ein weiterer wesentlicher Nachteil ist außerdem, daß die Spannzungen beim Einschrauben des Stößels auf Torsion beansprucht werden, wodurch die Lebensdauer der Spannhülse reduziert wird.

Bei einer anderen bekannten Spannvorrichtung (DE-A-34 02 635) wird die bereits erwähnte Vor-Anstellung der Spannzungen dadurch erreicht, indem die Spannzungen von einem Druckstück gespreizt werden, welches axial beweglich im Kopfgehäuse gelagert ist, wobei diesem Druckstück ein seine Bewegung von der Spannhülse weg begrenzendes, durch Einschrauben in die Welle lageveränderbares Anschlagglied zur einmaligen Einstellung dieser Vor-Anstellung zugeordnet ist. Die in der Druckschrift aufgezeigten Ausführungsformen sind mit dem Nachteil behaftet, daß relativ hohe Kräfte aufzuwenden sind, um die Spannhülse aus ihrer Spannstellung in die eine Werkzeugentnahme gestattende Entspannstellung zu bringen. Ein weiterer Nachteil ist darin zu sehen, daß die Spreizelemente lageabhängig von der Spannhülse eingebaut werden müssen, wodurch die Montage erschwert wird.

Aus der EP-A-O 037 021 ist eine weitere Spannvorrichtung zur lösbaren Halterung eines Werkzeuges im Kopfgehäuse eines zahnärztlichen Handstückes bekannt. Die dort offenbarten Ausführungsformen sind jedoch nicht, im Gegensatz zu den zuvor genannten Spannvorrichtungen, zur Halterung von Werkzeugen mit zylindrischem Schaft geeignet, vielmehr zur Halterung von Werkzeugen, die ein abgeflachtes und mit einer Ringnut versehenes Schaftende aufweisen, welches zur Drehmomentübertragung mit einem mit der Hohlwelle mitlaufenden Mitnehmer in Eingriff bringbar ist. Die bekannte Spannvorrichtung enthält eine daumenbetätigbare Handhabe in Form eines Druckdeckels, der durch ein sternförmiges Federelement in einer definierten Position gehalten wird. Das Federelement enthält eine zentrisch angeordnete Anformung, die einen Außenkonus bildet, der bei gedrückter Handhabe, also in der Entspannstellung, mit den freien Enden der federnden Spannungen in Eingriff kommt, wobei in dieser Stellung zwischen Außenkonus und den federnden Spannzungen eine Linienberührung gegeben ist. Diese Eingriffslinie verschiebt sich jedoch über den gesamten Öffnungshub gesehen, wodurch sich die Betätigungskräfte vergleichsweise, d.h. bei vergleichbaren Hebelverhältnissen, unnötig stark vergrößern.

Der im Anspruch 1 angegebenen Erfindung liegt die Aufgabe zugrunde, eine gegenüber dem Stand der Technik verbesserte Spannvorrichtung anzugeben, die insbesondere für eine Druckknopfbetätigung gut geeignet ist, wobei gegenüber bekannten Konstruktionen eine bessere Einbaumöglichkeit gegeben sein soll, mit nach Möglichkeit weniger bzw. weniger aufwendigeren Teilen und einer Entnahme des Werkzeuges mit geringerem Kraftaufwand bei ausreichend hohen Haltekräften. Eine vorteilhafte Weiterbildung soll darüber hinaus zum Ziel haben, die Teile lageunabhängig montieren zu können.

Dadurch, daß der Winkel des Außenkonus des Stößels deutlich größer ist als der Winkel vom Innenkonus der Spannhülse, bleibt die Eingriffslinie über den gesamten Öffnungshub an derselben Stelle der Spannelemente, die Eingriffslinie verschiebt sich also während des Öffnungshubes nicht, wie dies bei Spannvorrichtungen nach dem Stand der Technik der Fall ist. Die Betätigungskräfte werden dadurch nicht unnötig größer, was bei im Winkel gleichen oder annähernd gleichen Keilflächen der Fall sein würde, wo durch den sich verkürzenden Hebelarm eine höhere Öffnungskraft aufgebracht werden müßte.

Weitere Vorteile sind, daß die Spannvorrichtung insgesamt nur aus drei Teilen besteht, daß eine geringere Anzahl von Berührungsflächen mit hoher Bearbeitungsgüte vorhanden sind, und daß die Montage von der Werkzeugseite aus erfolgen kann, was den Vorteil hat, daß die Einstelltoleranzen auf der dem Druckdeckel abgewandten Seite liegen, auf der Druckdeckelseite dagegen sehr enge Toleranzen eingehalten werden können.

Vorteilhafte Ausgestaltungen und Weiterbildungen der Erfindung sind aus den Unteransprüchen und der nachfolgenden Beschreibung von zwei Ausführungsbeispielen zu entnehmen.

Es zeigen:

Figur 1 das Kopfgehäuse eines zahnärztlichen Turbinenhandstückes mit der erfindungsgemäßen Spannvorrichtung im Schnitt,

Figur 2 die Spannvorrichtung ohne eingesetztem Werkzeug im Schnitt,

Figuren 3 und 4 die Spannhülse in zwei um 90° versetzten Positionen,

Figur 5 die Spannhülse gemäß Figur 3 in der Draufsicht,

Figur 6 eine Alternativlösung zu der in Figur 2 gezeigten Ausführung bezüglich Festlegung des axialen Anschlages,

Figuren 7 bis 9 eine weitere Ausführungsform einer Spannvorrichtung in schaubildlicher Darstellung.

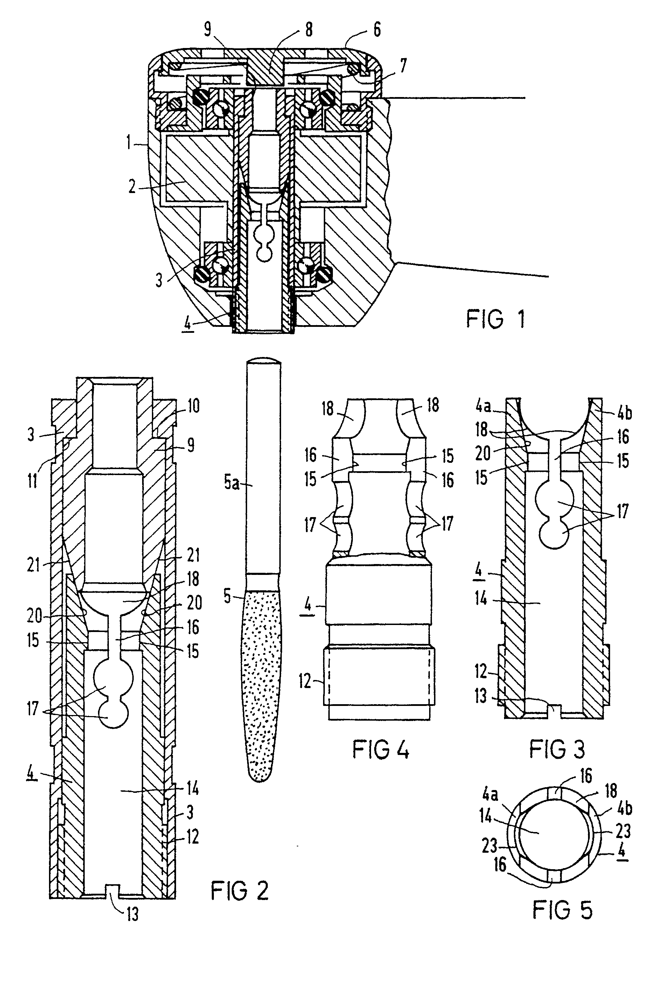

Die Figur 1 zeigt in einer Schnittdarstellung ein Kopfgehäuse 1 eines zahnärztlichen Turbinenhandstückes, in dem in bekannter Weise ein Turbinenrotor 2 drehbar gelagert ist. Der Turbinenrotor 2 treibt eine hülsenförmige Welle 3 an, in der eine Spannhülse 4 zur drehfesten Halterung eines mit zylindrischem Schaft 5a versehenen Werkzeuges 5 (Bohrer, Fräser od.dgl.) austauschbar gehaltert ist. Zur Entnahme des Werkzeuges ist an der dem Werkzeug abgewandten Ende des Kopfgehäuses 1 ein Druckdeckel 6 angeordnet, der bei Betätigung entgegen der Kraft einer Druckfeder 7 mit einem Druckstempel 8 auf einen in der Welle 3 axial verschiebar gelagerten hülsenförmigen Stößel 9 drückt, mit dem, wie später noch näher erläutert wird, die Spannvorrichtung in eine die Entnahme des Werkzeuges 5 gestattende Entspannstellung gebracht werden kann.

Die Spannvorrichtung einschließlich Welle und Stößel ist in Figur 2 im Längsschnitt dargestellt, wobei der besseren Übersichtlichkeit wegen das Werkzeug nicht eingezeichnet ist.

Die Welle 3 ist hülsenförmig ausgebildet und bildet an dem dem Werkzeugeintritt abgewandten Ende einen Absatz 10, an dem der Stößel 9 mit einer Schulter 11 anliegt. Die Spannhülse 4 ist am gegenüberliegenden Ende, also am Werkzeugeintritt, mittels einer Schraubverbindung 12 mit der Welle 3 verschraubt. Um das Einschrauben der Spannhülse zu erleichtern, ist ein Schlitz 13 als Eingriffsmittel für ein gesondertes Schraubwerkzeug vorgesehen.

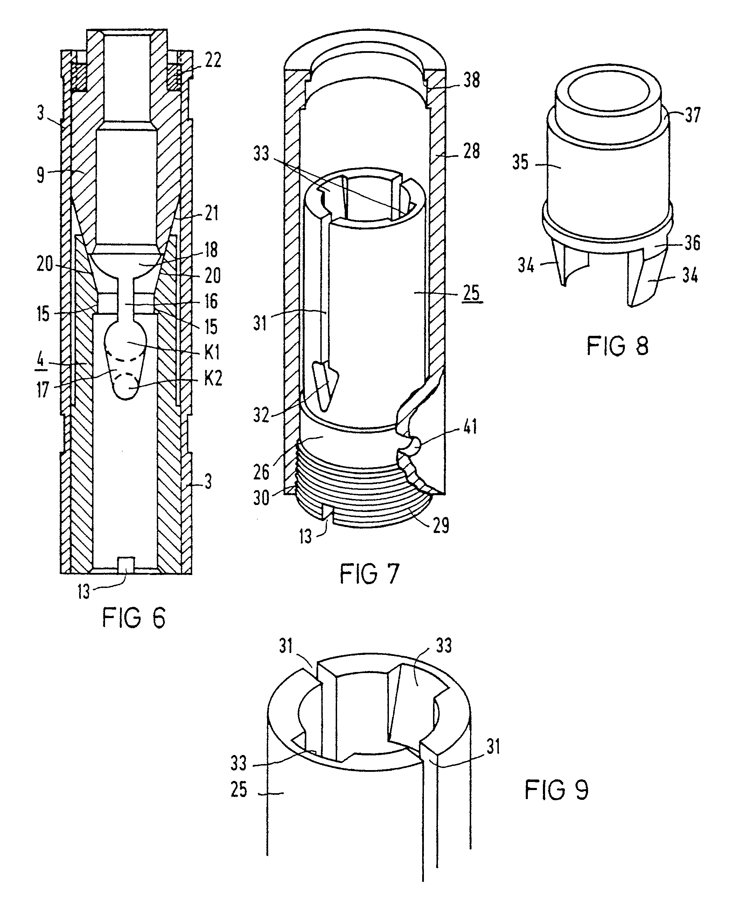

Die Spannhülse, die in den Figuren 3 und 4 als Einzelteil in zwei um 90° zueinander versetzten Stellungen im Längsschnitt und in Figur 5 in der Draufsicht gezeigt ist, enthält eine zentrische Innenbohrung 14, die etwa dem Durchmesser des Werkzeugschaftes 5a des aufzunehmenden Werkzeuges 5 entspricht. Im oberen, dem Werkzeugeintritt abgewandten Ende ist der Innendurchmesser geringfügig kleiner als der Schaftdurchmesser des Werkzeuges; in diesem Bereich werden Kontaktflächen gebildet, an denen die Spannhülse am Werkzeugschaft mit einer bestimmten Spannkraft anliegt. Um den Verschleiß der Kontaktflächen 15 und der Innenbohrung 14 möglichst gering zu halten, ist die Spannhülse vollständig oder teilweise mit CVD beschichtet.

Die Spannhülse 4 weist in bekannter Weise zwei diametral gegenüberliegende Schlitze 16 auf, die dem Werkzeugeintritt zugewandt in zwei kreisförmige Ausnehmungen 17 und zum freien Ende hin in ebenfalls kreisförmige Ausnehmungen 18 münden. Durch die Schlitze 16 und die Ausnehmungen 17 werden über den Umfang gesehen zwei federnde Zungen 4a, 4b gebildet, welche mit den Kontaktflächen 15 in der Spannstellung am Werkzeugschaft 5a anliegen und zur Entnahme des Werkzeuges radial nach außen gespreizt werden. Die Ausnehmungen 18 sind vorteilhafterweise so gestaltet, daß die Umfangslinie von Schlitz zu Schlitz zum freien Ende der Zungen hin abnimmt, d.h. die federnden Zungen werden in der Ansicht (Fig. 4) gesehen zum freien Ende hin schmäler.

Die Spannhülse 4 weist an dem dem Werkzeugeintritt abgewandten Ende einen (partiellen) Innenkonus 20 von 18° auf, der mit einem Außenkonus 21 des Stößels 9 korrespondiert (Fig. 2). Der Außenkonus 21 ist mit 30° flacher als der Innenkonus der Spannhülse. In Verbindung mit den vorerwähnten Ausnehmungen 18 beschränkt sich die Kontaktierung bei in Eingrifflage der beiden Konen 20, 21 praktisch auf einen Linienkontakt (Berührungslinie 23 in Figuren 4, 5), wodurch nur sehr kleine Ausrückkräfte erforderlich sind.

Die beiden Konen 20, 21 sind in der Entspannstellung miteinander in Eingriff, bei eingesetztem Werkzeug dagegen (Spannstellung der Spannhülse) berühren sich die beiden Konen 20, 21 nicht. Der Werkzeugschaft 5a wird in der Spannstellung über die Kontaktflächen 15 gehalten. Der Stößel 9 wird beim axialen Einführen des Werkzeuges gegen den Absatz 10 der Welle 3 geschoben. Um die Haltekraft aufzuheben und das Werkzeug aus der Spannvorrichtung entnehmen zu können, bedarf es eines leichten Druckes auf den Druckdeckel 6; der Druckstempel 8 kommt sodann auf die Stirnseite des Stößels 9 zu liegen und bewegt diesen bei weiterem Andrücken nach unten hin, wodurch infolge der konischen Verbindung von Stößel und Spannhülse die beiden Spannzungen 4a, 4b radial nach außen gedrückt werden und die Haltekraft an den Kontaktflächen 15 aufgehoben wird. Nach Loslassen des Druckdeckels 6 wird dieser mittels der Druckfeder 7 in seine Ausgangsstellung zurückgeführt. Der Stößel 9 wird an sich alleine infolge der achsparallel wirkenden Kraftkomponente, welche über die schrägen Konusflächen entsteht, selbsttätig wieder gegen den Anschlag 10 gedrückt.

Dadurch, daß der Stößel 9 ein rotationssymmetrisches, sehr einfach zu fertigendes Drehteil ist (Automatenfertigung), ist das Einsetzen in die Welle lageunabhängig. Die Montage ist sehr einfach. Zunächst wird der Stößel 9 von der Werkzeugseite aus in die Welle 3 axial eingeführrt, danach wird die Spannhülse 4 eingeschraubt, wobei die Einschraubtiefe den Grad der Vor-Anstellung bestimmt.

Alternativ zu der in Figur 2 gezeigten Lösung kann -wie in Figur 6 gezeigt - die Spannhülse 4 in der Welle 3 auch eingepreßt oder eingeklebt sein. Dann ist jedoch ein zusätzliches Teil erforderlich, nämlich ein Schraubring 22, der den erforderlichen Anschlag in der vorgewählten Vor-Anstellung bestimmt. Auch bei dieser Ausführung ist die Lageunabhängigkeit beim Einbau der Teile gegeben; sie ist jedoch insofern nicht so vorteilhaft, wie die in Figur 2 gezeigte Ausführung, als dort die Vor-Anstellung ohne Beeinflussung des Spaltes, welcher zwischen dem Druckdeckel 6 und dem Stößel 9 besteht, gegeben ist.

Die Ausnehmungen 18 können vorteilhafterweise dadurch erreicht werden, daß mittels eines Zylinderfräsers mit querliegender Achse von oben her stirnseitig auf die Spannhülse aufgefahren wird oder daß mittels eines an sich beliebigen Formfräsers mit quer zur Schlitzebene verlaufender Rotationsachse in Schlitzebene entlang gefräst wird. Eine Kreisform ist für die Ausnehmungen nicht zwingend erforderlich; wesentlich ist nur, daß im Bereich der Schlitze von der Spannhülse selbst möglichst viel Material weggenommen wird, so daß, wenn der Konus 21 des Stößels 9 in die Spannhülse eintaucht, nur ein Linienkontakt am entsprechenden Gegenkonus 20 der Spannhülse zustandekommt, wodurch die Ausrückkräfte sich auf ein Minimum reduzieren lassen. Dieser Linienkontakt bildet nur einen Bruchteil des Berührungsumfanges. Die Schlitze 16 und Ausnehmungen 17, 18 können anstelle durch Fräsen und Bohren auch in geeigneter Weise durch ein Erodier-Verfahren erstellt werden.

Die vorbeschriebene Ausführungsform hat gegenüber dem Stand der Technik den Vorzug, daß die gesamte Spannvorrichtung nur aus drei Teilen, nämlich der Welle 3, der Spannhülse 4 und dem Stößel 9 aufgebaut ist.

Die Figuren 7, 8 und 9 zeigen in schaubildlicher Darstellung ein weiteres Ausführungsbeispiel einer Spannvorrichtung nach der Erfindung. Bei diesem Ausführungsbeispiel ist eine Spannhülse 25 vorgesehen, welche einen Ringbund 26 und ein Außengewinde 29 aufweist. Die Spannhülse ist mittels des Ringbundes 26 in der Welle 28 geführt und mittels des Gewindes 29 axial in der Welle positioniert. Die Welle 28 ist zu diesem Zwweck im unteren Bereich mit einem Gewinde 30 versehen. Nach Positionieren der Spannhülse wird diese gegenüber Verdrehung gesichert. Dies kann durch ein oder mehrere Klebe- oder Schweißpunkte erfolgen, wozu am Umfang der Welle ein oder mehrere Zugangsbohrungen 41 vorhanden sind.

Die Spannhülse 25 ist, wie bereits bei der zuvor beschriebenen Ausführungsform, beidseitig mit Längsschlitzen 31 versehen, die in Ausnehmungen 32 enden. Diametral den Schlitzen 31 gegenüberliegend enthält die Spannhülse 25 zwei konische Anlageflächen 33, die mit ebenfalls konischen Gegenflächen 34 von am unteren Ende eines hülsenförmigen Stößels 35 angeformten Fortsätzen 36 korrespondieren (Fig. 8). Der Stößel 35 weist ferner einen Absatz 37 auf, mit dem der Stößel axial in der Welle am Innenbund 38 anliegt. Dieser Axialanschlag stellt sicher, daß die beiden mit konischen Außenflächen 34 versehenen Fortsätze 36 des Stößels 35 stets mit den konischen Anlageflächen 33 in Eingriff bleiben. Die Zuordnung von Stößel 35 und Spannhülse 25 ist nur einmal bei Montage vorzunehmen, indem Stößel und Spannhülse zueinander ausgerichtet von der Werkzeugseite aus in die Welle 28 eingesetzt werden, wobei die Einschraubtiefe der Spannhülse 25 den Grad der Voranstellung bestimmt. Auch bei dieser Ausführungsform sind die beiden Konen bzw. die konischen Anlageflächen 33, 34 so gestaltet, daß lediglich eine Linienberührung gegeben ist. Dieser Linienkontakt bleibt während des Ausrückvorganges praktisch unverändert.

Wie aus den Figuren 2, 3, 6, 7 und 8 hervorgeht, können die Ausnehmungen 17, 32, in die die Längsschlitze 16, 31 münden, unterschiedlich gestaltet sein. Besonders vorteilhaft ist eine Form, wie in Figur 6 gezeigt. Die Ausnehmung ist dort gebildet durch tangentiale Verbindung von zwei beabstandeten Kreisen K1 und K2 mit unterschiedlichem Durchmesser. Ein besonderer Vorteil dieser Ausnehmung liegt darin, daß ein gleichmäßiger Materialspannungsverlauf für die federnden Lappen gegeben ist

**Ansprüche**

1. Spannvorrichtung zum Einspannen von insbesondere zahnärztlichen Werkzeugen (5), welche einen zylindrischen Schaft (5a) aufweisen, enthaltend eine in Drehung versetzbare hülsenförmige Welle (3, 28) zur Aufnahme einer den Werkzeugschaft haltenden Spannhülse (4, 25), die an ihrem dem Werkzeug abgewandten Ende Längsschlitze (16, 31) aufweist, wodurch am Umfang gesehen zwischen den Schlitzen federnde, den Werkzeugschaft in der Spannstel-lung in der Spannhülse festhaltende Zungen (4a, 4b) gebildet sind, die zwecks Entnahme des Werkzeuges mittels eines axial verstellbaren, von einer Handhabe (6) betätigbaren Stößels (9, 35) radial nach außen in eine Entspannstellung bringbar sind, zu welchem Zweck der Stößel (9, 35) an seinem der Spannhülse (4, 25) zugewandten Ende einen Außenkonus (21, 34) und die Spannhülse (4, 25) einen mit diesem korrespondierenden Innenkonus (20, 33) aufweisen, wobei der Stößel (9, 35) axial frei beweglich in der Welle (3, 28) geführt, die Spannhülse (4, 25) dagegen axial unbeweglich in der Welle (3, 28) gehalten ist, **dadurch gekennzeichnet,** daß die beiden Konen (20, 33; 21, 34) so ausgebildet sind, daß sie am Umfang gesehen nur partielle, jeweils zu den Schlitzen (16, 31) deutlich versetzt angeordnete Anlageflächen bilden, die in der Entspannstellung miteinander Linienberührung haben, indem der Winkel vom Außenkonus (21, 34) des Stößels (9, 35) deutlich größer ist als der Winkel vom Innenkonus (20, 33) der Spannhülse (4, 25).

2. Spannvorrichtung nach Anspruch 1, **dadurch gekennzeichnet,** daß die beiden Konen (20, 33; 21, 34) so ausgebildet sind, daß sie zur Ebene der Schlitze (16, 31) um $90°$ versetzt angeordnete Anlageflächen bilden.

3. Spannvorrichtung nach Anspruch 1 oder 2, **dadurch gekennzeichnet,** daß der Stößel (9) rotationssymmetrisch ausgebildet ist und die Spannhülse (4) einander gegenüberliegende Ausnehmungen (18) enthält, wodurch ein partieller Konus (20) gebildet wird, der mit dem Stößelkonus (21) gegenüber der Schlitzebene versetzt angeordnete, vorzugsweise mittig der federnden Zungen (4a, 4b) wirkende Anlageflächen bildet.

4. Spannvorrichtung nach Anspruch 3, **dadurch gekennzeichnet,** daß die Ausnehmungen (18) so gestaltet sind, daß durch sie die Breite der federnden Zungen (4a, 4b) von den Schlitzen (16) zum Zungenende abnimmt.

5. Spannvorrichtung nach Anspruch 4, **dadurch gekennzeichnet,** daß die Form der Ausnehmung (18) derjenigen einer in Längsrichtung der Spannhülse (4) erstellten zylindrischen Ausfräsung entspricht, mit quer zur Längssymmetrieachse der Spannhülse und in Schlitzebene verlaufender Rotationsachse.

6. Spannvorrichtung nach Anspruch 4, **dadurch gekennzeichnet,** daß die Form der Ausnehmung (18) derjenigen einer in Schlitzebene mit einem Formfräser mit quer zur Schlitzebene verlaufender Rotationsachse erstellten Ausfräsung entspricht.

7. Spannvorrichtung nach Anspruch 1, **dadurch gekennzeichnet,** daß der Winkel vom Außenkonus (21, 34) des Stößels (9, 35) $30°$ und der Winkel vom Innenkonus (20, 33) der Spannhülse (4, 25), $18°$ beträgt.

8. Spannvorrichtung nach Anspruch 1, **dadurch gekennzeichnet,** daß der Stößel (35) zwei diametral einander gegenüberliegende Fortsätze (36) mit konischen Außenflächen (34) aufweist, die in korrespondierenden konischen Anlageflächen (33) der Spannhülse (25) eingreifen und daß die Spannhülse (25) vorzugsweise mittels einer Schraubverbindung (29, 30) in der Welle (28) gehalten wird.

9. Spannvorrichtung nach Anspruch 1, **dadurch gekennzeichnet,** daß die Spannhülse (4, 25) an ihrem der Werkzeugaufnahme zugewandten Ende in der Welle (3) gegen Verdrehung gesichert befestigt ist und der Stößel (9, 35) eine als Anschlag dienende Schulter (11, 37) aufweist, die an einem Absatz (10, 38) der Welle (3, 28) anliegt.

10. Spannvorrichtung nach Anspruch 1, **dadurch gekennzeichnet,** daß die Spannhülse (4) im Bereich der Ausnehmungen (18) einen Durchmesser (Kontaktfläche 15) aufweist, der geringfügig kleiner ist als der Schaftdurchmesser des zu halternden Werkzeuges (5).

11. Spannvorrichtung insbesondere nach Anspruch 1, **dadurch gekennzeichnet,** daß bei einem zahnärztlichen Handstück mit im Kopfgehäuse (1) gelagerter Welle (4) Stößel (9, 35) und Spannhülse (4, 25) von dem der Werkzeugaufnahme zugewandten Ende des Kopfgehäuses (1) in die Welle (4) eingesetzt und die Spannhülse (4, 25) in der Welle (3) eingeschraubt ist, wozu die Spannhülse (4) stirnseitig mit Eingriffsmitteln (13) für ein Hilfswerkzeug zum Einschrauben in die Welle (3) versehen ist.

## Claims

1. Clamping device for clamping in particular dental tools (5), which have a cylindrical stem (5a), containing a sleeve-shaped shaft (3, 28), displaceable in rotation, for receiving a clamping sleeve (4, 25) holding the tool stem, the clamping sleeve having on its end directed away from the tool longitudinal slots (16, 31), by means of which, seen from the circumference, resilient tongues (4a, 4b) are formed between the slots, securing the tool stem in the clamping position in the clamping sleeve, which tongues for the purpose of removal of the tool by means of an axially adjustable plunger (9, 35), which can be actuated by a handle (6), can be brought radially outwards into a slackened position, for which purpose the plunger (9, 35) on its end facing the clamping sleeve (4, 25) has an outer cone (21, 34) and the clamping sleeve (4, 25) has an inner cone (20, 33) corresponding with this, whereby the plunger (9, 35) is guided in the shaft (3, 28) so that it can move freely axially, whereas the clamping sleeve (4, 25) is held in the shaft (3, 28) so that it cannot move axially, characterized in that the two cones (20, 33; 21, 34) are constructed in such a way that, seen from the circumference, they form only partial contact surfaces, arranged clearly displaced respective to the slots (16, 31), the contact surfaces having linear contact with one another in the slackened position, in that the angle of the outer cone (21, 34) of the plunger (9, 35) is clearly greater than the angle of the inner cone (20, 33) of the clamping sleeve (4, 25).

2. Clamping device according to claim 1, characterized in that the two cones (20, 33; 21, 34) are constructed in such a way that they form contact surfaces arranged displaced by 90° to the plane of the slots (16, 31).

3. Clamping device according to claim 1 or 2, characterized in that the plunger (9) is constructed in a rotation-symmetrical manner and the clamping sleeve (4) contains recesses (18) lying opposite one another, whereby a partial cone (20) is formed which forms with the plunger cone (21) active contact surfaces arranged displaced relative to the slot plane, preferably in the centre of the resilient tongues (4a, 4b).

4. Clamping device according to claim 3, characterized in that the recesses (18) are formed in such a way that through them the width of the resilient tongues (4a, 4b) decreases from the slots (16) to the end of the tongue.

5. Clamping device according to claim 4, characterized in that the shape of the recess (18) corresponds to that of a cylindrical notch provided in the longitudinal direction of the clamping sleeve (4), with an axis of rotation extending transversely to the longitudinal symmetry axis of the clamping sleeve and in the slot plane.

6. Clamping device according to claim 4, characterized in that the shape of the recess (18) corresponds to that of a notch provided in the slot plane with a forming cutter with an axis of rotation extending transversely to the slot plane.

7. Clamping device according to claim 1, characterized in that the angle of the outer cone (21, 34) of the plunger (9, 35) amounts to 30° and the angle of the inner cone (20, 33) of the clamping sleeve (4, 25) amounts to 18°.

8. Clamping device according to claim 1, characterized in that the plunger (35) has two extensions (36) lying diametrically opposite one another with conical outer surfaces (34), which engage in corresponding conical contact surfaces (33) of the clamping sleeve (25) and in that the clamping sleeve (25) is held preferably by means of a screw connection (29, 30) in the shaft (28).

9. Clamping device according to claim 1, characterized in that the clamping sleeve (4, 25) on its end facing the tool receptacle is fastened in the shaft (3) so that it is secured against rotation and the plunger (9, 35) has a shoulder (11, 37) serving as stop, which rests against a step (10, 38) of the shaft (3, 28).

10. Clamping device according to claim 1, characterized in that the clamping sleeve (4) in the region of the recesses (18) has a diameter (contact surface 15) which is slightly smaller than the stem diameter of the tool (5) to be held.

11. Clamping device more particularly according to claim 1, characterized in that in a dental handpiece with shaft (4) mounted in the head housing (1), plunger (9, 35) and clamping sleeve (4, 25) inserted into the shaft (4) from the end of the head housing (1) facing the tool receptacle and the clamping sleeve (4, 25) is screwed in the shaft (3), for which the clamping sleeve (4) on the front side is provided with engaging means (13) for an auxiliary tool for screwing into the shaft (3).

**Revendications**

1. Dispositif de serrage servant à serrer des outils (5), notamment des outils de dentisterie, qui possèdent une tige cylindrique (5a), et comportant un arbre en forme de douille (3,28), pouvant être entraîné en rotation et servant à recevoir une douille de serrage (4,25), qui maintient la tige de l'outil et comporte, sur son extrémité tournée à l'opposé de l'outil, des fentes longitudinales (16,31), qui délimitent, lorsqu'on regarde au niveau de la périphérie, des languettes (4a,4b) qui maintiennent la tige de l'outil dans la position serrée dans la douille de serrage et, en vue de l'enlèvement de l'outil, peuvent être amenées dans une position de desserrage, au moyen d'un déplacement radial vers l'extérieur exécuté à l'aide d'un poussoir (9,35) déplaçable axialement et pouvant être actionné à l'aide d'une manette (6) le poussoir (9,35), comportant, à cet effet, au niveau de son extrémité tournée vers la douille de serrage (4,25), un cône extérieur (21,34), et la douille de serrage (4,25) possède un cône intérieur (20,33), correspondant au cône précédent, le poussoir (9,35) étant guidé de manière à être déplaçable axialement librement dans l'arbre (3,28), alors que la douille de serrage (4,25) est maintenue mobile axialement dans cet arbre, caractérisé par le fait que les deux cônes (20,33;21,34) sont agencés de telle sorte qu'ils forment, lorsqu'on regarde au niveau de la périphérie, seulement des surfaces partielles d'application, qui sont nettement décalées respectivement par rapport aux fentes (16, 31) et établissent entre elles, dans la position de desserrage, un contact linéaire par le fait que l'angle du cône extérieur (21,34) du poussoir (9,35) est nettement supérieur à l'angle du cône intérieur (20,33) de la douille de serrage (4,25).

2. Dispositif de serrage suivant la revendication 1, caractérisé par le fait que les deux cônes (20,33;21,34) sont agencés de manière à former des surfaces d'application décalées de $90°$ par rapport au plan des fentes (16,31).

3. Dispositif de serrage suivant la revendication 2, caractérisé par le fait que le poussoir (9) présente une symétrie de révolution et que la douille de serrage (4) contient des évidements (18), disposés réciproquement en vis-à-vis et délimitant un cône partiel (20) formant, avec le cône (21) du poussoir, des surfaces d'application décalées par rapport au plan des fentes et agissant de préférence au centre des languettes élastiques (4a,4b).

4. Dispositif de serrage suivant la revendication 3, caractérisé par le fait que les évidements (18) sont agencés de manière à réduire la largeur des languettes élastiques (4a,4b) depuis les fentes (16) en direction de l'extrémité des languettes.

5. Dispositif de serrage suivant la revendication 4, caractérisé par le fait que la forme de l'évidement (18) correspond à celle d'un fraisage cylindrique réalisé dans la direction longitudinale de la douille de serrage (4), avec un axe de rotation disposé transversalement par rapport à l'axe longitudinal de symétrie de la douille de serrage et situé dans le plan des fentes.

6. Dispositif de serrage suivant la revendication 4, caractérisé par le fait que la forme de l'évidement (18) correspond à celle d'un fraisage réalisé dans le plan des fentes avec une fraise à profiler ayant un axe de rotation transversal au plan des fentes.

7. Dispositif de serrage suivant la revendication 1, caractérisé par le fait que l'angle du cône extérieur (21, 34) du poussoir (9,35) est égal à $30°$ et que l'angle du cône intérieur (20,33) de la douille de serrage (4,25) est égal à $18°$.

8. Dispositif de serrage suivant la revendication 1, caractérisé par le fait que le poussoir (35) comporte deux prolongements diamétralement opposés (36) et possédant des surfaces extérieures coniques (34), qui s'engagent dans des surfaces coniques correspondantes d'application (33) de la douille de serrage (25), et que la douille de serrage (25) est retenue avantageusement à l'aide d'une liaison à vis (29, 30) dans l'arbre (28).

9. Dispositif de serrage suivant la revendication 1, caractérisé par le fait que la douille de serrage (4,25) est fixée, avec blocage en rotation, par son extrémité tournée vers le logement de l'outil, dans l'arbre (3) et que le poussoir (9,35) comporte un épaulement (11,34) qui est utilisé en tant que butée et s'applique contre une partie saillante (10,38) de l'arbre (3,28).

10. Dispositif de serrage suivant la revendication 1, caractérisé par le fait que la douille de serrage (4) possède, au niveau des évidements (18), un diamètre (surface de contact 15), qui est légèrement inférieur au diamètre de la tige de l'outil (5) devant être maintenu.

11. Dispositif de serrage, notamment suivant la revendication 1, caractérisé par le fait que dans le cas d'une pièce à main de dentisterie comportant un arbre (4) tourillonné dans le boltier de tête (1), un poussoir (9,35) et une douille de serrage (4,25) sont insérés dans l'arbre (4) à partir de l'extrémité, tournée vers le logement de l'outil, du boitier de tête (1) et que la douille de serrage (4,25) est vissée dans l'arbre (3), la douille de serrage (4) comportant à cet effet,sur sa face frontale, des moyens d'engrènement (13) pour un outil auxiliaire permettant son vissage dans l'arbre (3).

FIG 1

FIG 2

FIG 4

FIG 3

FIG 5

FIG 6

FIG 7

FIG 8

FIG 9